# EUROPEAN PATENT SPECIFICATION

(11) **EP 2 291 407 B1**
(45) Date of publication and mention of the grant of the patent: **11.03.2015**
(21) Application number: 09754026.4
(22) Date of filing: 26.05.2009
(51) Int. Cl.: C08B 3/22, C08B 3/28, D21H 17/27, D21H 19/42, C08J 3/12, C08J 3/14

(54) **PROCESS FOR PRODUCING A PIGMENT PRODUCT BASED ON A CELLULOSE ESTER**
VERFAHREN ZUR HERSTELLUNG EINES PIGMENTPRODUKTS AUF BASIS EINES CELLULOSEESTERS
PROCÉDÉ DE PRODUCTION D'UN PRODUIT PIGMENTAIRE À BASE D'ESTER DE CELLULOSE

(30) Priority: 30.05.2008 FI 20085527
(43) Date of publication of application: 09.03.2011
(73) Proprietor: UPM-Kymmene Corporation, 00130 Helsinki (FI)
(72) Inventor: TURUNEN, Sami, FI-53500 Lappeenranta (FI); PYKÄLÄINEN, Nina, FI-53300 Lappeenranta (FI); SINKKO, Tarja, FI-53500 Lappeenranta (FI); MIKKONEN, Hannu, FI-05200 Rajamäki (FI); PELTONEN, Soili, FI-05200 Rajamäki (FI); POHJOLA, Leila, FI-53200 Lappeenranta (FI)
(74) Representative: Papula Oy
(86) International application number: PCT/FI2009/050435
(87) International publication number: WO 2009/144373

(56) References cited:
- WO-A1-2009/106687
- WO-A2-2008/036274
- GB-A- 341 890
- GB-A- 408 952
- US-A- 3 317 513
- US-A- 3 342 921
- US-A- 4 047 862
- US-A1- 2006 175 257

## Description

### FIELD OF THE INVENTION

The invention relates to the process for producing a pigment product based on a cellulose ester as defined in the preamble of claim 1, and to the use of a pigment product as defined in the preamble of claim 12.

### BACKGROUND OF THE INVENTION

Known from the prior art are different kinds of cellulose derivatives and processes for their production.

Also known from the prior art are different kinds of pigments and fillers of mineral and organic origin and processes for their production. Known from the prior art is the formation of organic pigments from starch-based materials and pure cellulose. In these cases, the pigment is usually present in a mixture with some other material or in a dispersion. Also known from the prior art is the production of organic pigments from oil-based materials.

As mineral fillers and coating pigments are replaced by materials of organic origin either partly or completely, the environmental load can be reduced. By using fillers or pigments of organic origin e.g. in papermaking, the recycling of paper is enhanced and the deinking sludge is easier to process further or dispose of. This allows the application of used paper e.g. in the production of biofuels. Also, in the typical cases, the strength of paper can be improved by organic fillers, and smoothness of the paper surface during calendering can be improved by organic pigments.

A problem with oil-based organic pigments is their price which follows the development of the oil price, and high production costs.

A problem with the known starch-based organic pigments and those formed from pure cellulose is often the complexity of their preparation due to many production steps and therefore scarcity of their industrial production.

From WO 2009/106687, GB 408952, US 3342921 and US 3317513 are known different cellulose ester compounds.

### OBJECTIVE OF THE INVENTION

The objective of the invention is to disclose a new process for producing a pigment product based on a cellulose ester. Another objective of the invention is to provide an industrially applicable process for industrial production of a pigment product based on a cellulose ester.

### SUMMARY OF THE INVENTION

The process and the pigment product according to the invention are characterized by what has been presented in the claims.

The invention is based on a process for producing a pigment product based on a cellulose ester. According to the invention, a cellulose ester derivative modified by the transglycosylation technique is dissolved in a selected solvent or mixture of solvents suitable for the purpose to form a solution, a non-solvent is added to the solution, and a pigment product based on a cellulose ester is precipitated from the liquid solution by means of the non-solvent. The pigment product may be in the form of particles, a particle cluster, a dispersion or a foam.

In this context, a cellulose ester derivative refers to any cellulose ester or to any of its derivatives. The cellulose ester derivative may be a mixture of a number of cellulose esters and/or their derivatives.

In this context, a solution refers to a solution containing a solvent and/or a non-solvent, and preferably a cellulose ester derivative. The solution may be in the form of a solution, a suspension or a dispersion or in an equivalent liquid state.

In this context, a pigment product refers to a material or agent that provides a substrate or a surface with color or other optical property. The pigment may be translucent or opaque.

The invention is specifically based on reprocessing cellulose and a derivative thereof to a higher degree of processing.

In one embodiment, dissolution and precipitation are performed substantially in one process step. In an alternative embodiment, dissolution and precipitation are performed substantially in more than one process step.

Preferably, the solvent and the non-solvent are selected so as to be mixed together.

In one embodiment of the invention, the provided pigment product is pulverized to microparticles. In this context, microparticles refer to micro- or nanoscale particles in the size class of preferably less than 50µm, more preferably less than 10µm. The particles may be of any form, e.g. spherical.

In one embodiment, the microparticles are formed substantially in connection with the production of the pigment product. In one embodiment, the microparticles are formed substantially after the production of the pigment product.

In this context, pulverization refers to any pulverization, grinding, crushing or disintegration of a material to a desired particle size. Operation of the pulverizing devices, preferably mills, is typically based on application of pressure, cutting, rubbing, compression and/or the effect of an impact provided by blowing, or an equivalent principle of operation. Most mills operate as a combination of many principles of operation.

Pulverization may be performed by any suitable process known per se. In one embodiment, the pigment product is pulverized by air jet pulverization, preferably an air jet mill. In one embodiment, the pulverization is performed as Cryo-pulverization. The pulverization may be performed as wet or dry pulverization.

In one preferred embodiment, the provided microparticles do not absorb water or other liquid substance.

In one embodiment of the invention, the solvent is removed from the solution e.g. by evaporating, washing or by other suitable process. Preferably, the solvent is removed from the solution prior to the recovery of the pigment product from the solution.

In one embodiment of the invention, the deposit of the pigment product is separated from the solution, in one preferred embodiment from a solution which contains a non-solvent and from which solvent has been removed. Preferably, a precipitated deposit is recovered.

In one embodiment of the invention, the cellulose ester derivative is cellulose acetate.

A commercial product may be used as the cellulose ester derivative or it may be prepared from a cellulose ester.

In one embodiment of the invention, the cellulose ester derivative is modified by the oxidation technique. Oxidation may be performed by any process known per se, for example in the manner presented in patent application FI20085171.

In one embodiment of the invention, hydrogen peroxide (H₂O₂) is used as oxidizer. Any oxidizer suitable for the purpose may be used as the oxidizer.

In one embodiment of the invention, the cellulose ester derivative is modified by the transglycosylation technique. Modification by transglycosylation may be performed by any process known per se, for example in the manner presented in patent application FI20085171.

Modifying the cellulose ester derivative in the above described manners permits adjustment of the molecular weight so as to raise the process capacity. Reduction of the molecular weight results in a higher dry content in the starting solution.

In one embodiment of the invention, the degree of polymerization of the cellulose ester derivative is 10 < DP < 100.

In one embodiment of the invention, the acetyl content (DS) of the cellulose ester derivative is 0.1 to 3.0, preferably 1.7 to 3.0.

In one embodiment of the invention, the cellulose ester derivative is provided with at least one functional group, e.g. an ionic group, or a number of groups to obtain the desired properties. In one embodiment, the cellulose ester derivatives are provided with functional groups substantially in connection with their production or modification.

Ionic groups have a beneficial effect on the stability of the pigment product solution and permit formation of hydride structures. The purpose in reducing the polymeric molar mass and of the ester groups is to increase solubility of the polymer in the solvent and in the solution where formation of the pigment product or pigment product particles takes place spontaneously without auxiliaries when the solution is diluted. Another function of the ester groups is to increase hydrofobicity, insolubility in water, microbiological stability of the pigment product in aqueous slurry and to provide thermoplasticity which emerges as plasticity e.g. in the calendering of paper.

In one embodiment, the pigment product may be crosslinked e.g. by compounds reacting with OH groups, such as dialdehydes, diepoxides, dianhydrides or the like, to modify the properties of the pigment product.

In one embodiment of the invention, the solvent is selected from a group of acetone, ethanol, tetrahydrofuran, acetic acid, lye, water and combinations thereof. In one embodiment, the solvent may consist of or contain dimethyl sulphoxide, dimethyl formamide, pyrrolidone and/or pyridine.

In one embodiment of the invention, the non-solvent is selected from a group of water, petroleum ether, hexane, toluene, cyclohexane and mixtures of hydrocarbons, e.g. LIAV, and combinations thereof.

In one embodiment, the cellulose ester derivative is dissolved in a mixture comprising one part acetone, one part ethanol and 0.2 parts water (non-solvent). The resultant mixture is blended with water which is a non-solvent in a volumetric ratio of 1:10 to form a pigment product. In an alternative embodiment, the above mentioned mixture of the cellulose ester derivative is diluted very rapidly with water in a volumetric ratio of 1:3 to form the pigment product.

In one embodiment, the cellulose ester derivative is dissolved in acetone or tetrahydrofuran which may comprise ethanol in an amount of 0.1 to 0.5 parts by volume. The resultant solution is mixed with 3 to 7 parts by volume of hydrocarbon which is a non-solvent to form the pigment product.

In one preferred embodiment, production of the pigment product and the pigment product particles may be carried out directly as a follow-up process to the production of the cellulose ester, improving the cost-efficiency of the production.

Furthermore, the invention is based on the pigment product formed in the manner described above and on the use thereof. The provided pigment product may be used in surface-treatment, such as coating and covering, of a substrate, e.g. paper, and/or as a filler therein.

In this context, paper refers to any fiber-based paper or fiber product or the like. The paper may have been made from chemical pulp, mechanical pulp, chemimechanical pulp, recycled pulp, and/or mixtures thereof or the like. The paper may contain suitable fillers and additives and different kinds of surface treatment and coating agents. The paper may be in the form of a web or a sheet, or in other form suitable for the purpose.

The process according to the invention may be applied for use in the production of different kinds of pigment products and pigments applicable in the paper industry, e.g. in fine papers, newsprints, printing papers and soft tissues, in the cosmetics industry, e.g. in toothpastes, in the paint industry, hygienic product industry, plastics industry, coating industry, composite product industry, sheeting industry or in an equivalent application.

The pigment product formed according to the invention may be used either alone or in a mixture with other agents in different kinds or pigments, pigment precursors, mixtures, compounds or the like.

The pigment product or particles thereof formed according to the invention may be modified e.g. by crosslinking and functionalizing in the manner required by the use. The product is provided with various functional properties. Properties of the product may be tailored in terms of e.g. opacity, lightness, printing properties and oil absorption. The product may also be utilized as an additive or auxiliary agent in different uses.

The invention provides an excellent industrially applicable way of producing a pigment product based on a cellulose ester.

The process according to the invention provides an organic pigment product with lower specific gravity than in the previously known mineral-based pigments.

Another advantage of the pigment product according to the invention is recyclability. This permits the reduction of waste problems.

The pigment product according to the invention is applicable in novel paper applications in which low specific gravity of the raw materials provides the end product, such as paper, with new functional properties and improves cost-efficiency in the product supply chain from the producer to the customer.

### DETAILED DESCRIPTION OF THE INVENTION

The invention is described in more detail by the following example.

### Example 1

In this example, production of a pigment product formed from a cellulose ester derivative was studied. Cellulose acetate modified by the oxidation and transglycosylation technique was used as the cellulose ester derivative.

In the tests, pigment products were formed from a) oxidized cellulose acetate and b) transglycosylated cellulose acetate.

The purpose of the modifications was to reduce the molecular weight of cellulose acetate used as the starting material so as to raise the dry content of the starting material solution for the pigment product. In this manner, formation of the pigment product was easier.

100g of cellulose acetate was oxidized mechano-chemically with 14.3g of H₂O₂ (35%). The hydrogen peroxide was injected in the cellulose acetate and the mixture was agitated in a fluidized bed type mixer. The reaction mixture was heated in an oven for 3h.

Transglycosylation of the cellulose acetate was carried out as a mechano-chemical extrusion reaction or a batch reaction. In the extrusion reaction, the starting materials included 1000g of cellulose acetate, 100g of ethylene glycol and 1g of H₂SO₄. Reaction temperature was 150 to 160°C, and reaction time 10 to 15min. Repeating extrusion was applied and no glycol or catalyst added. The extruded material was pulverized, washed with water to remove non-reacting reagents and acid, filtered and dried. In the batch reaction, the starting materials included 1000g of cellulose acetate, 1500g of ethylene glycol and 10g of H₂SO₄. Reaction temperature was 95 to 100°C, and reaction time five hours. The resultant product was washed with water, filtered and dried. FTIR and ¹H, ¹³C NMR measurements established that no other reactions than transglycosylation had occurred in either of the production processes. Pore size in the resultant material was 50 to 300nm. The average particle size was 20µm.

To prepare the pigment product, 30kg of modified or commercial cellulose acetate was dissolved in 1000kg of acetic acid. Water was added as a non-solvent in an amount of 750kg to dilute the solution. The cloud point became visible. The pigment product was obtained through precipitation from the solution under heavy stirring and adding 3500kg of water. The precipitated pigment product was washed with water and centrifuged so as to obtain a pigment product dispersion with the dry content of 5% by weight. The dissolving process step was carried out at a temperature of about 20°C, alternatively a temperature range of 0 to 100°C could be applied.

The resultant pigment product was pulverized to microparticles.

It was discovered that a porous pigment product having a suitable pore structure could be formed in a simple manner. It was also discovered that oxidation and transglycosylation treatments of the cellulose acetate improved the properties of the resultant pigment product.

In the tests it was discovered that the provided pigment product was applicable for use both as a pigment and as a filler. The provided particles were attached tightly to the fiber surfaces. It was also discovered that the provided particles can be used as binders.

The process according to the invention is applicable in different embodiments for use in producing the most different kinds of pigment products based on a cellulose ester.

The invention is not limited merely to the example referred to above; instead, many variations are possible within the scope of the inventive idea defined by the claims.

## Claims

1. A process for producing a pigment product based on a cellulose ester, **characterized in that** a cellulose ester derivative modified by the transglycosylation technique is dissolved in a suitable solvent to form a solution, a non-solvent is added to the solution, and a pigment product based on a cellulose ester is precipitated.

2. The process according to claim 1, **chara c t e r i z e d** in that the provided pigment product is pulverized to microparticles.

3. The process according to claim 1 or 2, **characterized in that** the solvent is removed from the solution.

4. The process according to any one of claims 1 to 3, **characterized in that** the deposit of the pigment product is separated from the solution.

5. The process according to any one of claims 1 to 4, **characterized in that** the cellulose ester derivative is modified by the oxidation technique.

6. The process according to any one of claims 1 to 5, **characterized in that** the cellulose ester derivative is cellulose acetate.

7. The process according to any one of claims 1 to 6, **characterized in that** the degree of polymerization of the cellulose ester derivative is 10 < DP < 100.

8. The process according to any one of claims 1 to 7, **characterized in that** the acetyl content (DS) of the cellulose ester derivative is 0.1 to 3.0.

9. The process according to any one of claims 1 to 8, **characterized in that** the cellulose ester derivative is provided with at least one functional group.

10. The process according to any one of claims 1 to 9, **characterized in that** the solvent is selected from the group of acetone, ethanol, tetrahydrofuran, acetic acid, lye, water and combinations thereof.

11. The process according to any one of claims 1 to 10, **characterized in that** the non-solvent is selected from the group of water, petroleum ether, hexane, toluene, cyclohexane and mixtures of hydrocarbons, such as LIAV, and combinations thereof.

12. Use of a pigment product formed by the process according to any one of claims 1 to 11, **chara c t e r i z e d** in that the pigment product based on a cellulose ester is used in surface treatment of a substrate and/or in fillers.

## Patentansprüche

1. Verfahren zum Herstellen eines auf einem Celluloseester basierenden Pigmentproduktes,
**dadurch gekennzeichnet, dass** ein Celluloseester-Derivat, das durch ein Transglycosylierungsverfahren modifiziert ist, in einem geeigneten Lösungsmittel gelöst wird, um eine Lösung zu erzeugen, der Lösung ein Nichtlösungsmittel zugesetzt wird und ein auf Celluloseester basierendes Pigmentprodukt gefällt wird.

2. Verfahren nach Anspruch 1,
**dadurch gekennzeichnet, dass** das bereitgestellte Pigmentprodukt zu Mikropartikeln pulverisiert wird.

3. Verfahren nach Anspruch 1 oder 2,
**dadurch gekennzeichnet, dass** das Lösungsmittel aus der Lösung entfernt wird.

4. Verfahren nach einem der Ansprüche 1 bis 3,
**dadurch gekennzeichnet, dass** die Ablagerung des Pigmentproduktes von der Lösung abgetrennt wird.

5. Verfahren nach einem der Ansprüche 1 bis 4,
**dadurch gekennzeichnet, dass** das Celluloseester-Derivat durch die Oxidationstechnik modifiziert wird.

6. Verfahren nach einem der Ansprüche 1 bis 5,
**dadurch gekennzeichnet, dass** das Celluloseester-Derivat Celluloseacetat ist.

7. Verfahren nach einem der Ansprüche 1 bis 6,
**dadurch gekennzeichnet, dass** der Polymerisationsgrad des Celluloseester-Derivats 10 < DP < 100 beträgt.

8. Verfahren nach einem der Ansprüche 1 bis 7,
**dadurch gekennzeichnet, dass** der Acetylgehalt (DS) des Celluloseester-Derivats 0,1 bis 3,0 beträgt.

9. Verfahren nach einem der Ansprüche 1 bis 8,
**dadurch gekennzeichnet, dass** das Celluloseester-Derivat mit zumindest einer funktionellen Gruppe bereitgestellt wird.

10. Verfahren nach einem der Ansprüche 1 bis 9,
**dadurch gekennzeichnet, dass** das Lösungsmittel aus der Gruppe von Aceton, Ethanol, Tetrahydrofuran, Essigsäure, Lauge, Wasser und Kombinationen davon ausgewählt wird.

11. Verfahren nach einem der Ansprüche 1 bis 10,
**dadurch gekennzeichnet, dass** das Nichtlösungsmittel aus der Gruppe von Wasser, Petrolether, Hexan, Toluol, Cyclohexan und Gemischen von Kohlenwasserstoffen, wie LIAV, und Kombinationen davon ausgewählt wird.

12. Verwendung eines Pigmentproduktes, das nach dem Verfahren nach einem der Ansprüche 1 bis 11 erzeugt wurde,
**dadurch gekennzeichnet, dass** das auf einem Celluloseester basierende Pigmentprodukt bei einer Oberflächenbehandlung eines Substrats und/oder bei Füllstoffen verwendet wird.

## Revendications

1. Procédé pour produire un produit pigmentaire basé sur un ester de cellulose, **caractérisé en ce qu'**un dérivé d'ester de cellulose modifié par la technique de transglycosylation est dissous dans un solvant adapté pour former une solution, un non-solvant est ajouté à la solution, et un produit pigmentaire basé sur un ester de cellulose est précipité.

2. Procédé selon la revendication 1, **caractérisé en ce que** le produit pigmentaire fourni est pulvérisé en microparticules.

3. Procédé selon la revendication 1 ou 2, **caractérisé en ce que** le solvant est retiré de la solution.

4. Procédé selon l'une quelconque des revendications 1 à 3, **caractérisé en ce que** le dépôt du produit pigmentaire est séparé de la solution.

5. Procédé selon l'une quelconque des revendications 1 à 4, **caractérisé en ce que** le dérivé d'ester de cellulose est modifié par la technique d'oxydation.

6. Procédé selon l'une quelconque des revendications 1 à 5, **caractérisé en ce que** le dérivé d'ester de cellulose est l'acétate de cellulose.

7. Procédé selon l'une quelconque des revendications 1 à 6, **caractérisé en ce que** le degré de polymérisation du dérivé d'ester de cellulose est 10 < DP < 100.

8. Procédé selon l'une quelconque des revendications 1 à 7, **caractérisé en ce que** la teneur en acétyle (DS) du dérivé d'ester de cellulose est de 0,1 à 3,0.

9. Procédé selon l'une quelconque des revendications 1 à 8, **caractérisé en ce que** le dérivé d'ester de cellulose possède au moins un groupe fonctionnel.

10. Procédé selon l'une quelconque des revendications 1 à 9, **caractérisé en ce que** le solvant est choisi parmi le groupe constitué d'acétone, d'éthanol, de tétrahydrofurane, d'acide acétique, d'une base, d'eau et de combinaisons de ceux-ci.

11. Procédé selon l'une quelconque des revendications 1 à 10, **caractérisé en ce que** le non-solvant est choisi parmi le groupe constitué d'eau, d'éther de pétrole, d'hexane, de toluène, de cyclohexane et de mélanges d'hydrocarbures, tels que LIAV, et de combinaisons de ceux-ci.

12. Utilisation d'un produit pigmentaire formé par le procédé selon l'une quelconque des revendications 1 à 11, **caractérisé en ce que** le produit pigmentaire basé sur un ester de cellulose est utilisé dans un traitement de surface d'un substrat et/ou dans des charges.
